# EUROPEAN PATENT APPLICATION

(11) **EP 3 086 256 A1**
(43) Date of publication of application: **26.10.2016**
(21) Application number: 15305619.7
(22) Date of filing: 23.04.2015
(51) Int. Cl.: G06F 21/77, G06Q 20/32

(54) **METHOD OF MANAGING A SECURE ELEMENT IN A NFC DEVICE**

(71) Applicant: GEMALTO SA, 92190 Meudon (FR)
(72) Inventor: Foesser, Christophe, 13881 Gemenos Cedex (FR)
(74) Representative: Grevin, Emmanuel

(57) **Abstract**

The invention is a method for managing a secure element hosted in a NFC device comprising an execution environment and a registry used by the NFC controller for reaching applications embedded in the secure element. The execution environment automatically adds in the registry an identifier of an application as soon as a software service representing the application embedded in the secure element has been fully declared. An analyzer agent discovers a list of applications embedded in the secure element and retrieves parameters comprising an identifier of its associated application. The analyzer agent identifies an application from the list that satisfies a preset criterion, identifies a software service representing the application, customizes this software service with the parameters of the application and finalizes the declaration of the software service in the execution environment.

## Description

### (Field of the invention)

The present invention relates to methods of managing a secure element hosted in a NFC (Near Field Communication) device. It relates particularly to methods of allowing the NFC device to access applications embedded in a secure element.

### (Background of the invention)

A secure element is a tamper-resistant device which is intended to be hosted in a machine like a mobile phone, a Machine-to-Machine (M2M) device, or any host machine requiring secure computing. A secure element may be removable like a Universal Integrated Circuit Card (UICC) or a secure memory card. A secure element is generally a hardware-based component. A secure element may be welded to its hosting machine. A secure element permanently associated with its host device is called embedded secure element. A secure element may contain an application intended to be called by the connected hosting machine or by a distant machine. A secure element may contain computing means (like cryptographic services) or a secure storage means intended to be used by the connected hosting machine.

A specific framework has been defined - called Host card emulation (HCE) - that enables NFC devices to perform contactless transactions in card emulation mode even if the used credentials are stored in a software application running with the operating system (OS) of the NFC device. In other word, HCE opens up the possibility of storing a virtual contactless card application as a service running on the NFC device operating system. This option is currently supported by several operating systems like Android © OS v4.4 and upper and BlackBerry © OS.

Thanks to HCE, NFC controller can route communication from a contactless reader or POS (Point-Of-Sale) terminal to an HCE service on the NFC device's host CPU. A dedicated registry allow the NFC controller to determine where to route a request from a contactless reader to communicate with a given NFC application, which is identified by its application identifier (AID). The NFC controller uses the registry (e.g. one a routing table which is populated by the NFC device OS), which lists the AIDs of NFC applications stored in the secure element or in the NFC device's host CPU.

When a new application becomes available in a secure element, a software service representing the application of the secure element can be created in the HCE framework so that the OS of the NFC device populates the registry used by the NFC controller.

The software service is a static service - also called Off-HCE (OHCE) - paired with the new application. The software service is specifically associated with the new application. It comprises the identifier of the new application and other parameters and must be installed on the NFC device. Deployment of such a couple application/software service is complex because it must be installed on two distinct locations: the secure element and the corresponding NFC device.

There is a need to propose a new solution for allowing a NFC device to access applications embedded in a secure element.

### (Summary of the Invention)

An object of the invention is to solve the above mentioned technical problem.

An object of the present invention is a method for managing a secure element hosted in a device that comprises a NFC controller, an execution environment and a registry which is used by the NFC controller for reaching applications embedded in the secure element. The execution environment is configured to automatically add in the registry an identifier of an application embedded in the secure element as soon as a software service representing the application embedded in the secure element has been fully declared. The method comprises the following steps:
- an analyzer agent hosted in the device discovers a list of applications embedded in the secure element and retrieves parameters associated with each application of the list, each of said parameters comprising an identifier of its associated application,
- the analyzer agent identifies an application from the list that satisfies a preset criterion,
- the analyzer agent identifies a software service representing the application and customizes the software service according to the parameters of the application,
- the analyzer agent finalizes the declaration of the software service in the execution environment.

Advantageously, the method may comprise the further steps:
- in response to a preset event, the analyzer agent retrieves a second list of applications embedded in the secure element,
- the analyzer agent identifies a second application from the second list that satisfies the preset criterion,
- the analyzer agent identifies a second software service representing said second application and customizes the second software service according to the parameters of the second application,
- the analyzer agent finalizes the declaration of the second software service in the execution environment.

Advantageously, the preset event may be based on either a data received from the execution environment, a data received from a remote device, a time reference, a data received from the secure element, a data received from another secure element or a data received from the NFC controller.

Advantageously, the software service (S3) may have been installed without any application identifier before the step of discovery and the analyzer agent may dynamically customize the software service with the identifier of the application.

Advantageously, the analyzer agent may retrieve the software service from a remote location according to the parameters of the application and the analyzer agent may install the software service in the device.

Another object of the present invention is a device comprising a NFC controller, an execution environment, a secure element and a registry which is used by the NFC controller for reaching applications embedded in the secure element. The execution environment is configured to automatically add in the registry an identifier of an application embedded in the secure element as soon as a software service representing the application embedded in the secure element has been fully declared. The device comprises an analyzer agent configured to discover a list of applications embedded in the secure element and to retrieve parameters associated with each application of the list, each of said parameters comprising an identifier of its associated application. The analyzer agent is configured to identify an application from the list that satisfies a preset criterion. The analyzer agent is configured to identify a software service representing the application, to customize the software service according to the parameters of the application and to finalize the declaration of the software service in the execution environment.

Advantageously, the analyzer agent may be configured to retrieve a second list of applications embedded in the secure element in response to a preset event, to identify a second application from the second list that satisfies the preset criterion, to identify a second software service representing said second application, to customize the second software service according to the parameters of the second application and to finalize the declaration of the second software service in the execution environment.

Advantageously, the preset event may be based on either a data received from the execution environment, a data received from a remote device, a time reference, a data received from the secure element, a data received from another secure element or a data received from the NFC controller.

Advantageously, the software service may have been installed without any application identifier before the step of discovery and the analyzer agent may be configured to dynamically customize the software service with the identifier of the application.

Advantageously, the analyzer agent may be configured to retrieve the software service from a remote location according to the parameters of the application and to install the software service in the device.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a system comprising a NFC reader and a NFC device embedding a secure element according to the prior art;
- Figure 2 depicts schematically an example of a system comprising a NFC reader and a NFC device embedding a secure element according to the invention;
- Figure 3 depicts schematically an example of a NFC device embedding a secure element according to the invention; and
- Figure 4 is an example of a flowchart for managing an application according to the invention.

### (Detailed description of the preferred embodiments)

The invention may apply to all kinds of NFC device comprising at least one secure element. These NFC devices are preferably portable devices and may be devices like watches, mobile phones, tablets, glasses, Machine-To-Machine devices or any NFC-enabled computer.

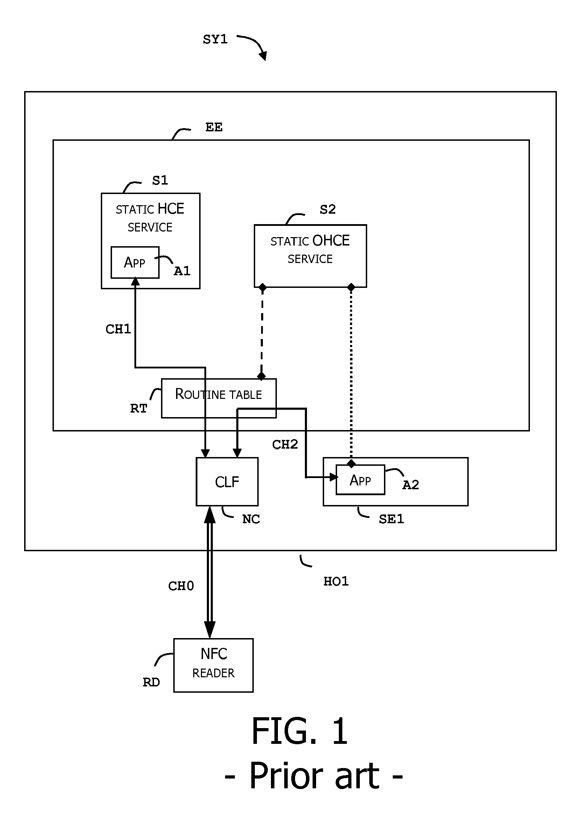

**Figure 1** shows schematically an example of a system SY1 comprising a NFC reader RD and a NFC device HO1 embedding a secure element SE1 according to the prior art.

The NFC device HO1 comprises a NFC controller NC, a secure element SE1 and an execution environment EE.

The execution environment EE comprises a HCE service S1, an OHCE service S2 and a Routine table RT (also named registry RT). The execution environment EE is adapted to automatically add in the Routine table RT an identifier of an application embedded in the secure element as soon as a software service representing the application embedded in the secure element has been fully declared in the execution environment EE. Similarly, the execution environment EE is adapted to automatically add in the Routine table RT an identifier of an application embedded in a software service as soon as the software service representing this application has been fully declared in the execution environment EE.

The HCE service S1 (e.g. software service S1) comprises a host NFC application A1.

The secure element SE1 comprises an NFC application A2. The OHCE service S2 (e.g. software service S2) does not comprise any application. The OHCE service S2 reflects the presence of the application A2 in the secure element SE1. The OHCE service S2 comprises parameters specific to the application A2. In particular, the OHCE service S2 comprises the identifier (AID) of the application A2. The OHCE service S2 is considered to be static because it is definitively tied to the application A2. Similarly, the HCE service S1 is considered to be static because it is definitively tied to the application A1.

Since both HCE service S1 and OHCE service S2 have been fully declared, the execution environment EE has updated the Routine table RT with identifiers of applications A1 and A2.

By accessing the routine table RT, the NFC controller NC is aware of the way to access each registered applications and can establish a channel CH1 with the application A1 or a channel CH2 with the application A2.

When a NFC contactless channel CH0 is established between the NFC reader RD and the NFC controller NC, the NFC controller NC can select the relevant path to access the targeted application.

The dashed lines of Figure 1 shows that the OHCE service S2 allows the declaration of the application A2 in the routine table RT while the dotted lines of Figure 1 shows that the OHCE service S2 reflects the existence of the application A2.

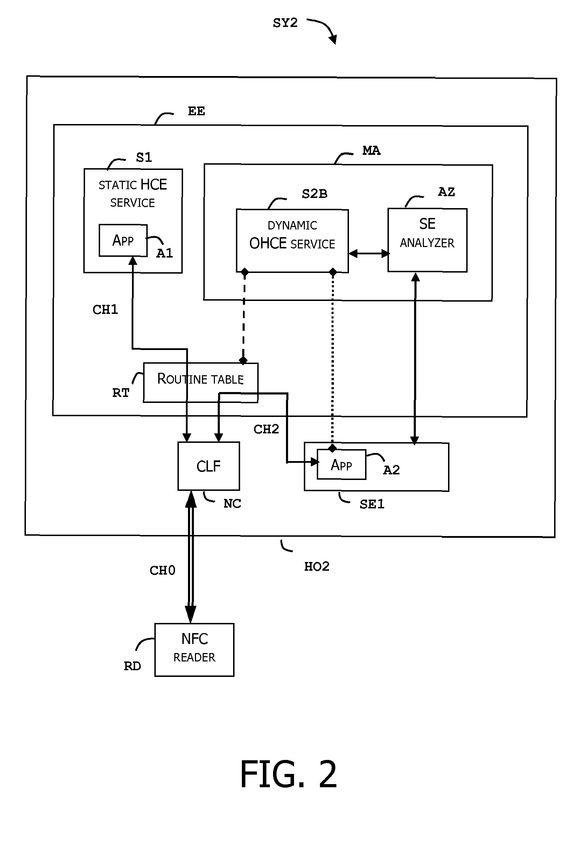

**Figure 2** shows schematically an example of a system SY2 comprising a NFC reader RD and a NFC device HO2 embedding a secure element SE1 according to the invention.

The system SY2 is similar to the system SY1 of Figure 1 with the following differences: the execution environment EE comprises a service manager MA including an OHCE service S2B and an analyzer agent AZ. The analyzer agent AZ can be implemented as a software application. It is configured to discover the list of applications embedded in the secure element SE1 and to retrieve parameters associated with each of these applications. For instance, the analyzer agent AZ can access the Contactless registry as defined by the GlobalPlatform Contactless Services - Card Specifications V2.2 Amendment C. The Contactless registry (stored in the secure element SE1) contains the list of available applications visible on contactless side which are embedded in the secure element SE1. The activation status of the application can be read through the Contactless registry. In another example, the analyzer agent AN can access the PPSE (Proximity Payment System Environment) as described in EMV® Contactless Specifications for Payment Systems - Book B - Entry Point Specification which provides the list of available contactless payment applications of the secure element SE2. The PPSE also specifies the active application.

The parameters of an application comprise at least an identifier of the application. The analyzer agent AZ is configured to select applications which satisfy a preset criterion. For instance, the application parameters may contain the domain of application (ex: Payment, Access or Transport) or the type of application (ex: Visa ® or MasterCard ®) and the analyzer agent AN can be configured to identify in the list the first active application matching the Payment domain.

The analyzer agent AZ is configured to identify a software service representing the selected application and to customize this software service according to the parameters of the selected application. For example, the analyzer agent AZ can activate (or install) a new OHCE service S2B (e.g. software service) corresponding to the application A2 and set the parameters of a valid OHCE service S2B by using the parameters of the application A2. The analyzer agent AZ can have all data needed to generate the OHCE service S2B. Alternatively, the analyzer agent AZ can retrieve the OHCE service S2B from a remote location (ex: server, handset memory, external mass storage device or server embedded in a secure element) according to the parameters of the application A2.

In another example, the OHCE service S2B can be previously installed in the execution environment EE (or in the service manager MA) without valid parameters or with incomplete parameters. In other words, the OHCE service S2B can be previously installed and not fully or correctly declared in the execution environment EE. In this case, the analyzer agent AZ completes the initialization of the OHCE service S2B parameters by using parameters of the application A2. An advantage of this embodiment is to finalize the declaration of the OHCE service S2B without requiring the agreement of the final user. Such user agreement is generally requested by the operating systems in order to avoid unwanted application installation. Consequently, the invention allows improving the user's experience.

This example can be implemented using the dynamic AID registration for HCE service feature which is available in Android ® 5.0 L preview of December 2014 (aka Lillopop ®).

The analyzer agent AZ is configured to finalize the declaration of the software service in the execution environment EE. For instance, the analyzer agent AZ can declare the existence of the OHCE service S2B to the execution environment EE.

Advantageously, the analyzer agent AZ may be configured to customize the software service and to finalize the declaration of the software service through a unique operation. For instance, the analyzer agent AZ can declare the existence of the OHCE service S2B to the execution environment EE by setting the OHCE service S2B parameters via an API of the execution environment EE dedicated to the declaration/update of software service.

Thus according to the invention the analyzer agent AZ can dynamically declare a software service reflecting the availability of an application embedded in a secure element.

The analyzer agent AZ may start a new cycle for application discovery and declare as many software services as available applications embedded in the secure element SE1. Advantageously, the analyzer agent AZ can be configured to start such a new cycle in response to a preset event EV.

In one example, the preset event EV may be based on a data received from the execution environment EE or from an application present in the execution environment EE. In another example, the preset event EV may be based on a data received from a remote device which can trigger the analyzer agent AZ. In other examples, the preset event EV may be based on a time reference, a data received from the NFC controller NC or a data received from the secure element SE1. In another example, the preset event EV may be based on a data received from another secure element embedded in the NFC device HO2. In this case, the second secure element is able to trigger the analysis of the secure element SE1. For instance, a removable SD © card may trigger the analysis in an embedded secure element.

The analyzer agent may also be configured to remove a previous software service if the corresponding application is no more available or active in the secure element SE1 or if the corresponding application no longer meet the criterion.

In another example, both the OHCE service S2B and the analyzer agent AZ may be installed directly in the execution environment EE without service manager MA.

In another example, the Routine table RT may be split in two parts: one in execution environment EE and one outside the execution environment EE. In this case the NFC controller NC is configured to access both parts of the Routine table RT.

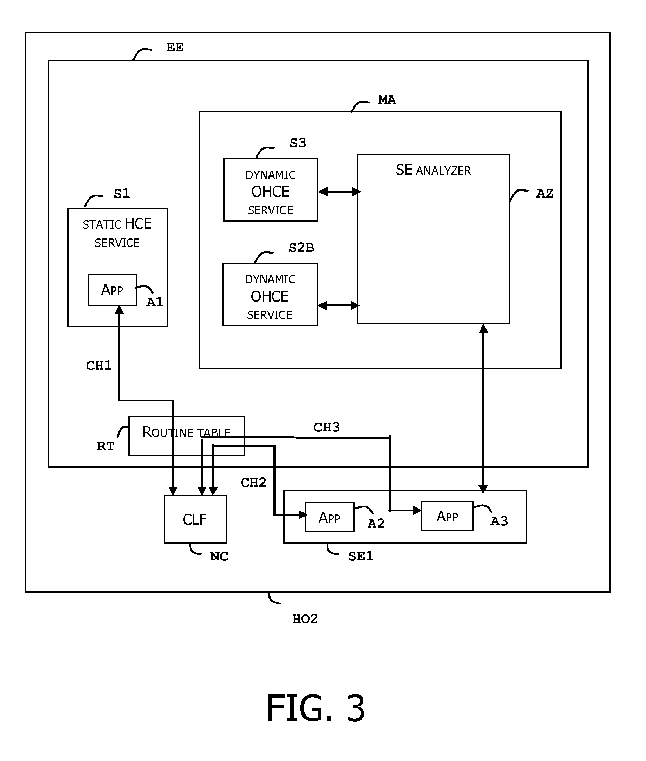

Figure 3 shows schematically an example of a NFC device HO2 embedding a secure element SE1 according to the invention.

The NFC device HO2 is similar to the NFC device HO2 of Figure 2 with the following differences: an additional NFC application A3 has been installed in the secure element SE1. The analyzer agent AZ has performed another discovery cycle and installed a new software service S3 reflecting the availability of the application A3. The NFC controller NC is now aware of the existence of the application A3 and able to access the application A3 through a communication channel CH3.

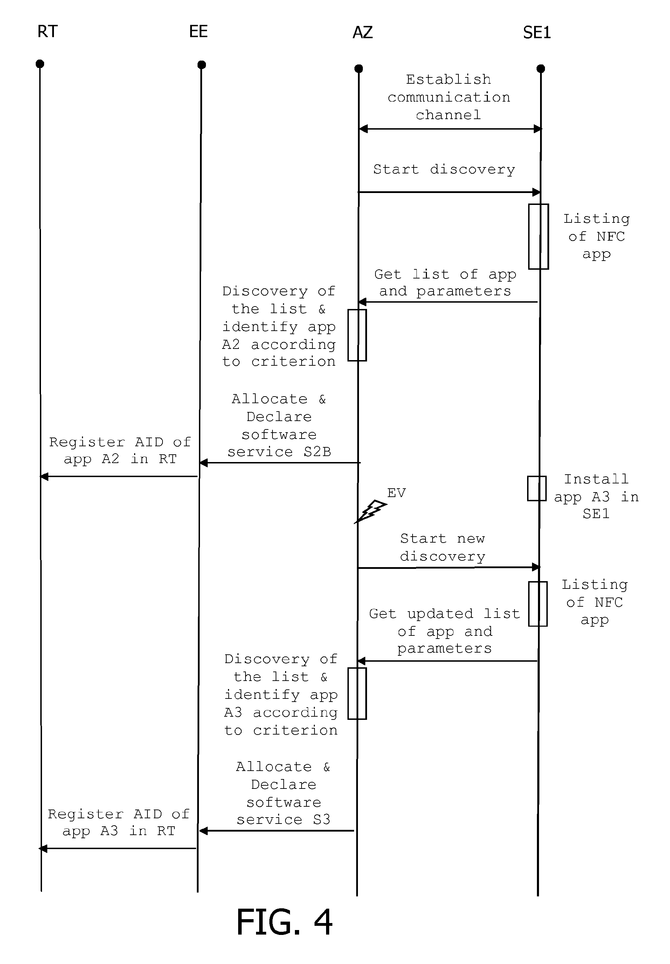

**Figure 4** shows schematically an example of a flowchart for managing an application according to the invention.

In this example, we assume that the secure element SE1 comprises the application A2 only at the beginning.

At first step, the analyzer agent AZ establishes a communication channel with the secure element SE1. For instance, the analyzer agent AZ may start a session with the secure element SE1 though OMAPI (Open Mobile API of SIMalliance).

At second step, the analyzer agent AZ starts the discovery of the applications embedded in the secure element SE1. For instance, the analyzer agent AZ may select the PPSE of the secure element SE1.

At third step, the analyzer agent AZ gets the list of available applications and their parameters. In this example, the list comprises only the application A2 and its parameters. For example the application may have the following identifier: AID= A0 00 00 00 03 10 10 01 (for Visa^{™} application) or AID= A0 00 00 00 04 10 10 01 (for Mastercard^{™} application).

At fourth step, the analyzer agent AZ checks that the application A2 complies with a preset criterion (ex: payment application) and is activated, then selects (identifies/adds to a processing list) the application A2.

At fifth step, the analyzer agent AZ allocates the software service S2B to the application A2, customizes it according to parameters of application A2 and declares the software service S2B in the execution environment EE. The customization may be performed by selecting a relevant banner (i.e. image) and a description based on the application parameters.
For instance, the following parameters may be used:

```
 <host-apdu-service xmlns:android="http://schemas.android.com/apk/res/android"
  android:description="@string/hce_visa_service_description"
  android:requireDeviceUnlock="true"
  android:apduServiceBanner="@drawable/card_unknown">
    <aid-groupe android:description="@string/hce_visa_payment_group"
    android:category="payment">
    </aid-group>
    </host-apdu-service>
```

At sixth step, the execution environment EE automatically adds the identifier (AID) of the application A2 in the registry RT (i.e. Routine table) since the software service S2B is fully declared.

At this point, the NFC controller NC is now able to uses and access the application A2.

At seventh step, a new application A3 is installed in the secure element SE1. For instance, such an installation can be performed via OTA (Over-The-Air) mechanism from a remote server.

At eighth step, a specific event EV occurs. For instance, the secure element SE1 sends to the analyzer agent AZ a message requesting a new discovery operation or an OTA message triggers it after installation of the application A3 in the secure element.

At ninth step, the analyzer agent AZ starts a new analysis in response to the received message.

At tenth step, the analyzer agent AZ gets the list of available applications and their parameters. In this example, the list comprises two applications A2, A3 and their parameters.

At eleventh step, the analyzer agent AZ checks the application A3 complies with a preset criterion (ex: payment application) and is activated, then identifies (i.e. selects) the application A3. The analyzer agent AZ is configured not to create a second software service for the application A2 in order to avoid double items.

At twelfth step, the analyzer agent AZ associates the software service S3 with the application A3, customizes it according to parameters of application A3 and declares the software service S3 in the execution environment EE.

At thirteenth step, the execution environment EE automatically adds the identifier (AID) of the application A3 in the registry RT.

At this point, all NFC applications of the secure element SE1 have their mirroring software service declared in the execution environment. The NFC controller NC is now able to uses and access both applications A2 and A3. The NFC device is now in a state as shown at Figure 3.

By taking into account the event EV, the analyzer agent AZ allows to automatically reflect changes of the secure element content.

Advantageously, the criterion can be modified between two analysis cycles either by the analyzer agent AZ itself or by a settings update initiated by a distant machine. For instance, the criterion can be changed from "Payment domain" to "Transport domain".

When using the PPSE mechanism for retrieving the list of applications, the criterion may be set to select the active application among the list.

Advantageously, the analyzer agent AZ can remove a software service S3 when the list retrieved from the secure element does not contain any more the corresponding application.

Advantageously, the analyzer agent AZ can perform a discovery analysis according to the invention in several secure elements embedded in the NFC device HO2.

An advantage of the invention is to dynamically adapt the settings of the NFC controller to reflect the applications available in the secure element.

It should be noted that the analyzer agent AZ is independent of the applications embedded in the secure element. Thus the analyzer agent AZ can be installed in a fleet of NFC devices without taking care of the secure element connected to these NFC devices.

An advantage of the invention is to ease the application management if a new secure element is plugged to the NFC device.

It must be understood, within the scope of the invention, that the above-described examples are provided as non-limitative embodiments. In particular, the Routine table can be implemented as a concatenation of one registry placed into the execution environment EE and one registry placed outside the execution environment EE. The analyzer agent AZ can also manage the discovery analysis according to the invention in several profiles (i.e. virtual subscriptions behaving as many independent secure elements) embedded a single secure element.

The invention is not limited to the management of a single category of application.

Advantageously, the invention may be used to generate several services for a unique application. For example an application may be designed to provide a Transport service (access control to underground network for instance) and an Access service (access control to a company working area). In this case, two different services may be registered in the routine table for two different OHCE classified categories for example.

The invention is not limited to the embodiment of Android ®. It applies to all devices having an operating system configured to authorize the declaration of a software service reflecting the availability of an application embedded in a secure element.

## Claims

1. A method for managing a secure element (SE1) hosted in a device (HO2) comprising a NFC controller (NC), an execution environment (EE) and a registry (RT) which is used by the NFC controller (NC) for reaching applications embedded in the secure element (SE1), said execution environment (EE) being configured to automatically add in the registry (RT) an identifier of an application embedded in the secure element (SE1) as soon as a software service representing the application embedded in the secure element (SE1) has been fully declared, **characterized in that** the method comprises the steps:
- an analyzer agent (AZ) hosted in the device (HO2) discovers a list of applications embedded in the secure element (SE1) and retrieves parameters associated with each application of the list, each of said parameters comprising an identifier of its associated application,
- the analyzer agent (AZ) identifies an application (A2) from the list that satisfies a preset criterion,
- the analyzer agent (AZ) identifies a software service (S2B) representing the application (A2) and customizes the software service (S2B) according to the parameters of the application (A2),
- the analyzer agent (AZ) finalizes the declaration of the software service (S2B) in the execution environment (EE).

2. A method according to claim 1, wherein the method comprises the further steps:
- in response to a preset event (EV), the analyzer agent (AZ) retrieves a second list of applications embedded in the secure element (SE1),
- the analyzer agent (AZ) identifies a second application (A3) from the second list that satisfies the preset criterion,
- the analyzer agent (AZ) identifies a second software service (S3) representing said second application (A3) and customizes the second software service (S3) according to the parameters of the second application (A3),
- the analyzer agent (AZ) finalizes the declaration of the second software service (S3) in the execution environment (EE).

3. A method according to claim 2, wherein the preset event (EV) is based on either a data received from the execution environment (EE), a data received from a remote device, a time reference, a data received from the secure element (SE1), a data received from another secure element or a data received from the NFC controller (NC).

4. A method according to claim 1, wherein the software service (S3) has been installed without any application identifier before the step of discovery and wherein the analyzer agent (AZ) dynamically customizes the software service (S2B) with the identifier of the application (A2).

5. A method according to claim 1, wherein the analyzer agent (AZ) retrieves the software service (S2B) from a remote location according to the parameters of the application (A2) and wherein the analyzer agent (AZ) installs the software service (S2B) in the device (HO2).

6. A device (HO2) comprising a NFC controller (NC), an execution environment (EE), a secure element (SE1) and a registry (RT) which is used by the NFC controller (NC) for reaching applications embedded in the secure element (SE1), said execution environment (EE) being configured to automatically add in the registry (RT) an identifier of an application embedded in the secure element (SE1) as soon as a software service representing the application embedded in the secure element (SE1) has been fully declared,
**characterized in that** the device (HO2) comprises an analyzer agent (AZ) configured to discover a list of applications embedded in the secure element (SE1) and to retrieve parameters associated with each application of the list, each of said parameters comprising an identifier of its associated application, **in that** the analyzer agent (AZ) is configured to identify an application (A2) from the list that satisfies a preset criterion, **in that** the analyzer agent (AZ) is configured to identify a software service (S2B) representing the application (A2), to customize the software service (S2B) according to the parameters of the application (A2) and to finalize the declaration of the software service (S2B) in the execution environment (EE).

7. A device according to claim 6, wherein the analyzer agent (AZ) is configured to retrieve a second list of applications embedded in the secure element (SE1) in response to a preset event (EV), to identify a second application (A3) from the second list that satisfies the preset criterion, to identify a second software service (S3) representing said second application (A3), to customize the second software service (S3) according to the parameters of the second application (A3) and to finalize the declaration of the second software service (S3) in the execution environment (EE).

8. A device according to claim 7, wherein the preset event (EV) is based on either a data received from the execution environment (EE), a data received from a remote device, a time reference, a data received from the secure element (SE1), a data received from another secure element or a data received from the NFC controller (NC).

9. A device according to claim 6, wherein the software service (S2B) has been installed without any application identifier before the step of discovery and wherein the analyzer agent (AZ) is configured to dynamically customize the software service (S2B) with the identifier of the application (A2).

10. A device according to claim 6, wherein the analyzer agent (AZ) is configured to retrieve the software service (S2B) from a remote location according to the parameters of the application (A2) and to install the software service (S2B) in the device (HO2).
